# EUROPEAN PATENT APPLICATION

(11) **EP 4 207 377 A1**
(43) Date of publication of application: **05.07.2023**
(21) Application number: 22208972.4
(22) Date of filing: 23.11.2022
(51) Int. Cl.: H01M 4/48, H01M 4/587, H01M 4/66, H01M 4/74, H01M 10/054, H01M 10/0568, H01M 50/414

(54) **ENERGY STORAGE DEVICE COMPRISING AN ALUMINUM ELECTRODE**

(30) Priority: 29.12.2021 TW 110149467
(71) Applicant: APh ePower Co., Ltd., Kaohsiung City 821 (TW)
(72) Inventor: WU, Jui-Hsuan, 821 Kaohsiung City (TW); TSAI, Shih Po Ta, 821 Kaohsiung City (TW); CHOU, Li-Hsien, 821 Kaohsiung City (TW)
(74) Representative: Becker, Eberhard

(57) **Abstract**

An energy storage device (100) made of an aluminum electrode includes a positive electrode (110), a negative electrode (120), a separator (130), and an electrolyte. The negative electrode (120) is the aluminum electrode. The separator (130) is arranged between the positive electrode (110) and the negative electrode (120). The electrolyte is arranged between the positive electrode (110) and the negative electrode (120) and partly located in the separator (130). The electrolyte includes an aluminum halide and an ionic liquid. The aluminum halide is configured to produce a faradaic pseudo-capacitance reaction in the energy storage device. The ionic liquid is configured to cooperate with the faradaic pseudo-capacitance reaction in the energy storage device.

## Description

### BACKGROUND

### Technical Field

The disclosure relates to an energy storage device. In particular, the disclosure relates to an energy storage device made of an aluminum electrode.

### Description of Related Art

Generally speaking, an energy storage device is limited by factors such as conductivity of an electrolyte and a migration rate of an ion in the electrolyte and a positive electrode, so that the energy storage device may not exhibit relatively good performance in terms of electric capacity and life.

### SUMMARY

The disclosure provides an energy storage device made of an aluminum electrode, which exhibits relatively good performance in terms of fast charging and discharging (C-rate), electric capacity, and life.

An energy storage device made of an aluminum electrode of an embodiment of the disclosure includes a positive electrode, a negative electrode, a separator, and an electrolyte. The negative electrode is the aluminum electrode. The separator is arranged between the positive electrode and the negative electrode. The electrolyte is arranged between the positive electrode and the negative electrode and partly located in the separator. The electrolyte includes an aluminum halide and an ionic liquid. The aluminum halide is configured to produce a faradaic pseudo-capacitance reaction in the energy storage device. The ionic liquid is configured to cooperate with the faradaic pseudo-capacitance reaction in the energy storage device.

In an embodiment of the disclosure, the faradaic pseudo-capacitance reaction includes a surface-type faradaic pseudo-capacitance reaction and an intercalation-type faradaic pseudo-capacitance reaction, the positive electrode produces the surface-type faradaic pseudo-capacitance reaction and the intercalation-type faradaic pseudo-capacitance reaction, and the negative electrode produces the surface-type faradaic pseudo-capacitance reaction.

In an embodiment of the disclosure, the positive electrode is formed by coating a nickel foil with an intercalation material.

In an embodiment of the disclosure, the intercalation material includes natural graphite, artificial graphite, a carbon nanotube, graphene, or a transition metal oxide.

In an embodiment of the disclosure, the intercalation material has at least a first-sized particle and a second-sized particle, and the first-sized particle is different from the second-sized particle.

In an embodiment of the disclosure, the negative electrode includes a high specific surface area material.

In an embodiment of the disclosure, the high specific surface area material includes foamed-metal, expanded mesh metal, or activated carbon.

In an embodiment of the disclosure, a molar (mol) ratio of the aluminum halide to the ionic liquid is greater than at least 1.5.

In an embodiment of the disclosure, a moisture content of the electrolyte is less than at least 1,000 ppm.

In an embodiment of the disclosure, the separator includes a polymer film.

Based on the foregoing, in the disclosure, ions generated during reaction of the aluminum halide in the electrolyte produce a faradaic pseudo-capacitance reaction in the energy storage device made of an aluminum electrode, and the high-conductivity ionic liquid in the electrolyte cooperates with the faradaic pseudo-capacitance reaction to enhance the capacitance effect. As such, the energy storage device exhibits relatively good performance in terms of fast charging and discharging, electric capacity, and life.

To make the aforementioned more comprehensible, several embodiments accompanied with drawings are described in detail as follows.

### BRIEF DESCRIPTION OF THE DRAWINGS

The disclosure contains at least one color photograph. Copies of the disclosure publication with the color photographs will be provided by the Patent & Trademark Office upon request and payment of the necessary fee.

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1A is a schematic partial cross-sectional view of an energy storage device made of an aluminum electrode according to an embodiment of the disclosure.
FIG. IB is a schematic cross-sectional view of a positive electrode faradaic pseudo-capacitance reaction of an energy storage device made of an aluminum electrode according to an embodiment of the disclosure.
FIG. 1C is a schematic partial cross-sectional diagram of a negative electrode faradaic pseudo-capacitance reaction of an energy storage device made of an aluminum electrode according to an embodiment of the disclosure.
FIG. 2 is a schematic diagram showing results of life cycles of an energy storage device made of an aluminum electrode according to an embodiment of the disclosure.
FIG. 3 is a schematic diagram showing results of comparing examples with a comparative example in terms of electrochemical impedance spectroscopy (EIS).
FIG. 4 is a schematic diagram showing results of comparing examples with a comparative example in terms of cyclic voltammetry.
FIG. 5 and FIG. 6 are schematic diagrams showing results of comparing examples with a comparative example in terms of life and charge.
FIG. 7, FIG. 8, and FIG. 9 are scanning electron microscope (SEM) photographs of examples and a comparative example.

### DESCRIPTION OF THE EMBODIMENTS

To make the content of the disclosure easier to understand, embodiments are specifically provided below as examples according to which the disclosure can be reliably implemented. Numerous practical details will be described together for clarity in description below. It should be understood, however, that these practical details are not intended to limit the disclosure. That is to say, these practical details are not essential in some embodiments of the disclosure.

Unless otherwise defined, all terms (including technical and scientific terms) used herein have the same meaning as commonly understood by those of ordinary skill in the art.

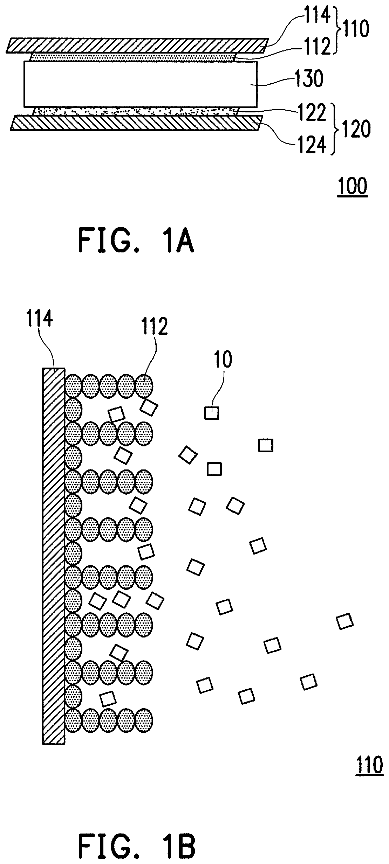

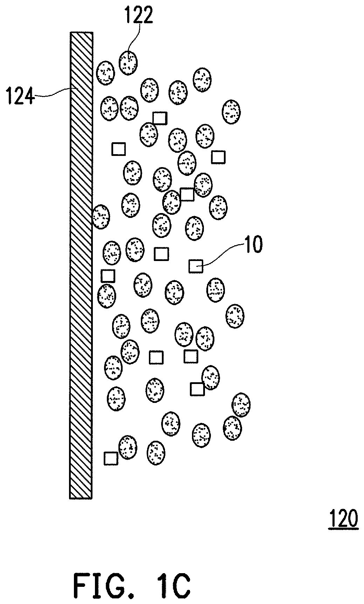

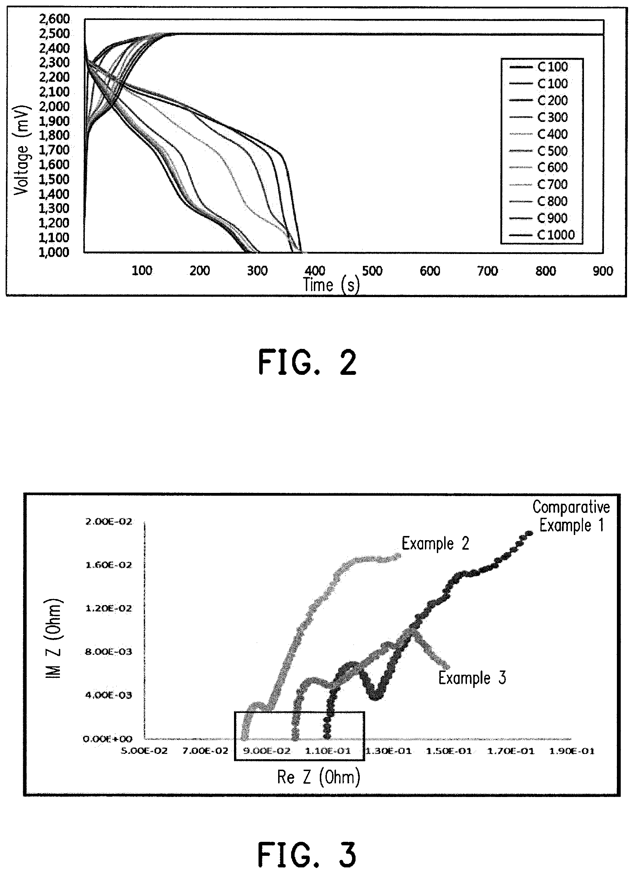

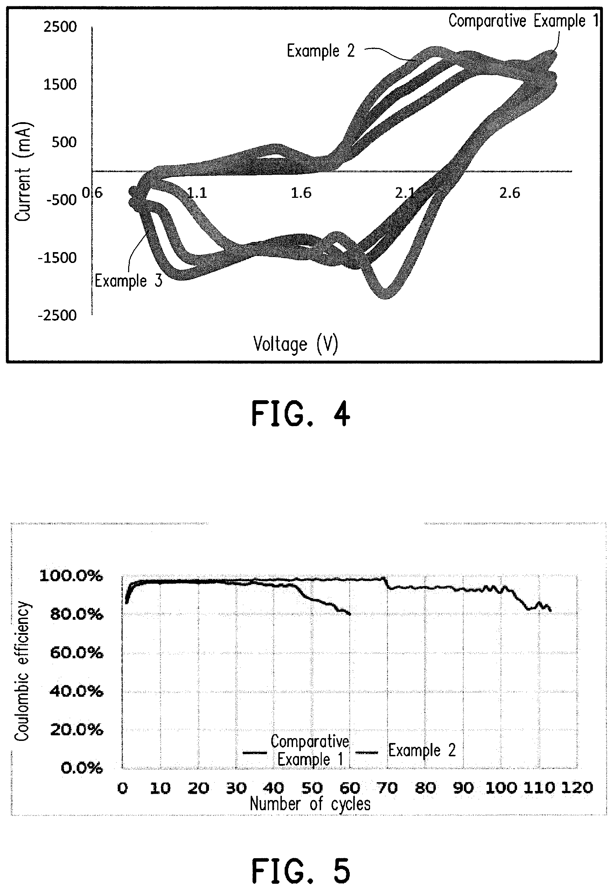

FIG. 1A is a schematic partial cross-sectional view of an energy storage device made of an aluminum electrode according to an embodiment of the disclosure. FIG. IB is a schematic cross-sectional view of a positive electrode faradaic pseudo-capacitance reaction of an energy storage device made of an aluminum electrode according to an embodiment of the disclosure. FIG. 1C is a schematic partial cross-sectional diagram of a negative electrode faradaic pseudo-capacitance reaction of an energy storage device made of an aluminum electrode according to an embodiment of the disclosure. FIG. 2 is a schematic diagram showing results of life cycles of an energy storage device made of an aluminum electrode according to an embodiment of the disclosure. FIG. 3 is a schematic diagram showing results of comparing examples with a comparative example in terms of electrochemical impedance spectroscopy (EIS). FIG. 4 is a schematic diagram showing results of comparing examples with a comparative example in terms of cyclic voltammetry. FIG. 5 and FIG. 6 are schematic diagrams showing results of comparing examples with a comparative example in terms of life and charge. FIG. 7, FIG. 8, and FIG. 9 are scanning electron microscope (SEM) photographs of examples and a comparative example.

With reference to FIG. 1A, FIG. 1B, and FIG. 1C, an energy storage device 100 of this embodiment includes a positive electrode 110, a negative electrode 120, a separator 130, and an electrolyte (not shown). The negative electrode 120 is an aluminum electrode. The separator 130 and the electrolyte are arranged between the positive electrode 110 and the negative electrode 120. The electrolyte is partly located in the separator 130. Besides, the electrolyte includes an aluminum halide and an ionic liquid. The aluminum halide is configured to produce a faradaic pseudo-capacitance reaction in the energy storage device 100. The ionic liquid is configured to cooperate with the faradaic pseudo-capacitance reaction in the energy storage device 100. Accordingly, ions generated during reaction of the aluminum halide in the electrolyte of this embodiment produce a faradaic pseudo-capacitance reaction in the energy storage device 100, and the high-conductivity ionic liquid in the electrolyte cooperates with the faradaic pseudo-capacitance reaction to enhance the capacitance effect. As such, the energy storage device 100 exhibits relatively good performance in terms of fast charging and discharging, electric capacity, and life. Here, the energy storage device 100 may be a "hybrid (or composite) battery (or capacitor)" having both intercalation-deintercalation and adsorption-desorption (or electrochemical reactions). That is, the energy storage device 100 of this embodiment may be applied to the design of an aluminum battery and a supercapacitor.

Further, as shown in FIG. IB and FIG. 1C, the faradaic pseudo-capacitance reaction includes a surface-type faradaic pseudo-capacitance reaction and an intercalation-type faradaic pseudo-capacitance reaction. The positive electrode 110 produces the surface-type faradaic pseudo-capacitance reaction and the intercalation-type faradaic pseudo-capacitance reaction. The negative electrode 120 produces the surface-type faradaic pseudo-capacitance reaction. That is to say, during charging, the aluminum halide (Al₂Cl₇⁻) of the electrolyte undergoes an electrochemical reversible adsorption reaction on the surface of the negative electrode 120 and generates an ion 10 (AlCl₄⁻). Then, the ion 10 is ionized through the electrolyte (having the ionic liquid) for storage of intercalated and emigrated charge at the positive electrode 110. As such, the positive electrode 110 of the energy storage device 100 may have performance of two faradaic pseudo-capacitance reactions (respectively the intercalation-type faradaic pseudo-capacitance reaction and the surface-type faradaic pseudo-capacitance reaction), and the negative electrode 120 may have performance of one faradaic pseudo-capacitance reaction (the surface-type faradaic pseudo-capacitance reaction). Therefore, taking the high-conductivity ionic liquid as the electrolyte of the energy storage device 100, the charging and discharging rate can be effectively improved, achieving fast charging and fast discharging. Furthermore, through the adsorption properties of the electrical double layer in the ionic liquid, the electric capacity of the energy storage device 100 can be effectively improved. Moreover, corresponding to optimization of the capability above, the life of the energy storage device 100 is also increased accordingly. Here, the surface-type faradaic pseudo-capacitance reaction may have reaction reversibility.

Further, the mechanism of a faradaic pseudo-capacitance reaction is an electrochemical behavior with an electroactive material (producing a highly reversible chemical adsorption-desorption or redox reaction) in a two-dimensional (or quasi-two-dimensional) space on the electrode surface to generate a capacitance related to the electrode charging potential. Therefore, the faradaic pseudo-capacitance reaction may be produced not only on the electrode surface but also in the entire electrode or battery. As such, the energy storage device 100 obtains an electric capacity and an energy density higher than those of other energy storage devices (e.g., an electric double layer capacitor (supercapacitor)). For example, in the case of the same electrode area, the electric capacity of the energy storage device 100 of this embodiment may be 10 times to 100 times the capacitance of an electric double layer capacitor, but the disclosure is not limited thereto.

In some embodiments, due to a relatively low conductivity, solvents are not used in the electrolyte to further improve the cooperative effect. For example, the solvents include ethylene carbonate (EC), diethyl carbonate (DEC), dimethyl carbonate (DMC), ethyl methyl carbonate (EMC), but the disclosure is not limited thereto.

In some embodiments, the material properties of the positive electrode 110 of the energy storage device 100 is associated with the number of intercalatable ions 10, affecting the charging and discharging capacity available to the energy storage device 100. Therefore, the positive electrode 110 may be formed by coating a nickel foil 114 with an intercalation material 112 (as shown in FIG. 1A) to alleviate ion diffusion and adversely affected electron transfer due to a positive electrode using only an intercalation material. It should be noted that FIG. IB exemplarily shows the material microstructure of the intercalation material 112. In a macroscopic view, the intercalation material 112 is formed as an entire layer coated on the nickel foil 114.

In some embodiments, the intercalation material includes natural graphite, artificial graphite, a carbon nanotube, graphene, or a transition metal oxide. Here, the disclosure does not limit the type of the intercalation material 112. Intercalation materials 112 that allow active material intercalation of ions all belong to the protection scope of the disclosure.

In some embodiments, ion diffusion may be further controlled by increasing the coating weight of the intercalation material 112 and controlling the thickness of the intercalation material 112, enhancing the capacitance effect and improving the mechanical strength. For example, the coating thickness of the intercalation material 112 may range from 3 milligrams per square centimeter (mg/cm²) to 18 mg/cm² (e.g., 3 mg/cm², 6 mg/cm², 9 mg/cm², 12 mg/cm², 15 mg/cm², 18 mg/cm², or any value within the range from 3 mg/cm² to 18 mg/cm²), but the disclosure is not limited thereto.

In some embodiments, the intercalation material 112 with particles of different sizes may be further selected for mixing (the intercalation material 112 in FIG. IB is only in an exemplary ratio instead of a real ratio) to suppress intercalation and emigration in the positive electrode 110 causing irreversible expansion of the energy storage device 100. For example, the intercalation material 112 has at least a first-sized particle and a second-sized particle. The first-sized particle is different from the second-sized particle. Particle sizes of the first-sized particle and the second-sized particle may range from 5 micrometers (µm) to 50 µm (e.g., 5 µm, 10 µm, 20 µm, 30 µm, 40 µm, 50 µm, or any value within the range from 5 µm to 50 µm), but the disclosure is not limited thereto. In other embodiments, intercalation materials of the same particle size may also be used.

In some embodiments, the negative electrode 120 includes a high specific surface area material. For example, the high specific surface area material 122 may be formed by coating on an aluminum foil 124 (as shown in FIG. 1A, and may be activated carbon, for example) or may substitute for an aluminum foil to be used directly as the negative electrode 120 (not shown, and is foamed-metal or expanded mesh metal, for example). Accordingly, the surface faradaic pseudo-capacitance reaction is increased by the high specific surface area to improve electricity storage capability. In addition, the diffusion capability of the ion 10 may also be increased to improve the capacitance behavior, increase the intercalation and emigration rate of the ion 10, and improve the fast charging and fast discharging capability of the energy storage device 100. However, the disclosure is not limited thereto. It should be noted that FIG. 1C exemplarily shows the material microstructure of the high specific surface area material 122. In a macroscopic view, the high specific surface area material 122 is formed as an entire layer coated on the aluminum foil 124.

In some embodiments, the high specific surface area material may include foamed-metal (e.g., foamed nickel or foamed aluminum), expanded mesh metal (e.g., expanded aluminum), or activated carbon. A porosity of the foamed-metal may range from 50% to 90% (e.g., 50%, 60%, 70%, 80%, 90%, or any value within the range from 50% to 90%). A thickness of the foamed-metal may range from 50 µm to 1 millimeter (mm) (e.g., 50 µm, 100 µm, 300 µm, 600 µm, 900 µm, 1 mm, or any value within the range from 50 µm to 1 mm). An area density of the foamed-metal may range from 400 grams per square centimeter (g/cm²) to 1200 g/cm² (e.g., 400g/cm², 600g/cm², 800g/cm², 1,000g/cm², 1,200g/cm², or any value within the range from 400g/cm² to 1,200g/cm²). A thickness of the expanded mesh metal may range from 30 µm to 500 µm (e.g., 30 µm, 100 µm, 200 µm, 300 µm, 400 µm, 500 µm, or any value within the range from 30 µm to 500 µm). A pore size of the expanded mesh metal may range from 0.1 µm to 3 mm (e.g., 0.5 mm, 0.8 mm, 1 mm, 2 mm, 3 mm, or any value within the range from 0.1 µm to 3 mm). A specific surface area of the activated carbon may range from 500 square meters/gram (m²/g) to 3,000 m²/g (e.g., 500 m²/g, 1,000 m²/g, 2,000 m²/g, 3,000 m²/g, or any value within the range from 500 m²/g to 3,000 m²/g). It should be noted that the disclosure does not limit the types and specifications of the high specific surface area material 122. The types and specifications of the high specific surface area material 122 may be selected and adjusted depending on the actual design requirements.

It should be noted that, since the foamed nickel produces aluminum on its surface due to chemical reaction when the foamed nickel is used as the material of the negative electrode 120, the foamed nickel as the material of the negative electrode 120 may also be regarded as an aluminum electrode. In other words, the aluminum electrode of embodiments of the disclosure may be defined as the negative electrode 120 using an aluminum foil and coated with other materials (e.g., activated carbon), the negative electrode 120 directly using an aluminum material (e.g., expanded aluminum or foamed aluminum), or the negative electrode 120 using a material (e.g., foamed nickel) with aluminum produced thereon. These definitions all belong to the protection scope of the aluminum electrode of the disclosure.

In some embodiments, selection of materials corresponding to the positive electrode 110 and the negative electrode 120 may increase the relative concentration of active materials in the electrolyte. For example, a molar ratio of the aluminum halide to the ionic liquid is greater than at least 1.5. Here, the aluminum halide may be aluminum chloride, and the ionic liquid may be 1-ethyl-3-methylimidazolium chloride or 1-butyl-3-methylimidazolium chloride, but the disclosure is not limited thereto. The molar ratio and the type of the aluminum halide and the ionic liquid may be determined depending on the actual design requirements.

In some embodiments, a moisture content of the electrolyte is less than at least 1,000 ppm, for example, ranging from 300 ppm to 800 ppm (e.g., 300 ppm, 400 ppm, 500 ppm, 600 ppm, 700 ppm, 800 ppm, or any value within the range from 300 ppm to 800 ppm), to reduce the probability of charge reduced due to the combination of moisture and active materials, but the disclosure is not limited thereto.

In some embodiments, since the electrolyte partly located in the separator 130 causes redox reaction also in the pores of the separator, aluminizing also occurs in the separator. As such, if a separator with a high porosity and a high dielectric constant (e.g., glass fiber) is selected, a relatively great number of aluminizing dendrites are likely to be generated under high current charging and discharging, increasing the probability of dendrite-induced short circuits, and degrading the life. Therefore, the separator 130 may include a polymer film, having a low porosity and a low dielectric constant, so that the capacitance effect is not likely in the separator 130. Accordingly, aluminizing is not likely, and the capacitance effect of electrochemical aluminizing is on the surface of the negative electrode 120, reducing the probability of dendrite-induced short circuits and increasing the life.

In some embodiments, the polymer film may be a polymer pore-forming material or a polymer fiber material. A pore size of the polymer pore-forming material ranges from 0.03 µm to 20 µm (e.g., 0.03 µm, 1 µm, 5 µm, 10 µm, 20 µm, or any value within the range from 0.03 µm to 20 µm). Alternatively, a fiber diameter of the fiber material ranges from 0.1 µm to 20 µm (e.g., 0.1 µm, 1 µm, 5 µm, 10 µm, 20 µm, or any value within the range from 0.03 µm to 20 µm). For example, the polymer film may be polyethylene (PE), polypropylene (PP), polyethylene terephthalate (PET), polyethersulfone (PES), polycarbonate (PC), polyvinylidene fluoride (PVDF), polytetrafluoroethylene (PTFE), polyimide (PI), or a combination thereof. Besides, the separator 130 may be a composite material. For example, the polymer film may be selectively composited with glass fibers, but the disclosure is not limited thereto.

The effects of the energy storage device of embodiments of the disclosure will be described in more detail below with reference to Examples 1 to 4 and Comparative Example 1 and Comparative Example 2. Besides, although Example 1 to Example 4 are described below, the details of the materials used, the process, and the like may be appropriately changed without going beyond the scope of the disclosure, and the disclosure should not be limitingly construed by Examples described below.

### < Example 1 >

An energy storage device of Example 1 is a pouch-cell-type aluminum battery with a length of 12 cm and a width of 8.5 cm, where an electrolyte includes an aluminum halide: an ionic liquid (AlCl₃:[EMIM]Cl) with a molar concentration of 2:1, a positive electrode is a nickel foil coated with graphite paste, a negative electrode is an aluminum foil coated with activated carbon paste, and a separator is polyethersulfone.

### < Example 2 >

An energy storage device of Example 2 is a pouch-cell-type aluminum battery with a length of 12 cm and a width of 8.5 cm, where an electrolyte includes an aluminum halide: an ionic liquid (AlCl₃:[EMIM]Cl) with a molar concentration of 2:1, a positive electrode is a nickel foil coated with graphite paste, a separator is polyethersulfone, and a negative electrode is an expanded aluminum.

### < Example 3 >

An energy storage device of Example 3 is a pouch-cell-type aluminum battery with a length of 12 cm and a width of 8.5 cm, where an electrolyte includes an aluminum halide: an ionic liquid (AlCl₃:[EMIM]Cl) with a molar concentration of 2:1, a positive electrode is a nickel foil coated with graphite paste, a separator is polyethersulfone, and a negative electrode is foamed nickel.

### < Example 4 >

An energy storage device of Example 4 is a pouch-cell-type aluminum battery with a length of 12 cm and a width of 8.5 cm, where an electrolyte includes an aluminum halide: an ionic liquid (AlCl₃:[EMIM]Cl) with a molar concentration of 2:1, a positive electrode is a nickel foil coated with graphite paste, a negative electrode is an aluminum foil coated with activated carbon paste, and a separator is polytetrafluoroethylene (PTFE).

### < Comparative Example 1 >

An energy storage device of Comparative Example 1 is a pouch-cell-type aluminum battery with a length of 12 cm and a width of 8.5 cm, where an electrolyte includes an aluminum halide: an ionic liquid (AlCl₃:[EMIM]Cl) with a molar concentration of 2:1, a positive electrode is a nickel foil coated with graphite paste, a separator is glass fiber, and a negative electrode is a plain aluminum foil (without coating a high specific surface area material).

### < Comparative Example 2 >

An energy storage device of Comparative Example 2 is a pouch-cell-type aluminum battery with a length of 12 cm and a width of 8.5 cm, where an electrolyte includes an aluminum halide: an ionic liquid (AlCl₃:[EMIM]Cl) with a molar concentration of 2:1, a positive electrode is a nickel foil coated with graphite paste, a negative electrode is an aluminum foil coated with activated carbon paste, and a separator is glass fiber (without using a polymer film).

Here, other undescribed compositions and specifications of the aluminum battery should be obtainable by those of ordinary skill in the art according to any content encompassed within the spirit and scope of the appended claims. Besides, although Examples 1 to 4 are applications of an aluminum battery, they can be substituted into applications of a supercapacitor by those of ordinary skill in the art according to any content encompassed within the spirit and scope of the appended claims. Therefore, applications of a supercapacitor also belong to the protection scope of the disclosure. showing results of life cycles of an energy storage device made of an aluminum electrode according to an embodiment of the disclosure

FIG. 2 shows a life cycle test using Example 1 under a current of 300 milliampere hours per gram (mAh/g) and a charging voltage and a discharging voltage of 5C. The results of FIG. 2 show lines similar to the state of capacitance (ref). That is to say, the lines are nearly oblique straight lines instead of platforms, which also indicates that the system of Example 1 is a system of an aluminum pseudo-capacitance energy storage device. Besides, under such a high current and such a large area, the life of Example 1 may be maintained at more than 400 cycles, and the coulombic efficiency may be as high as 99%, which indicates that the energy storage device of Example 1 has relatively good performance. It should be noted that C100 in FIG. 2 represents 100 cycles, C200 represents 200 cycles, and so on and so forth.

FIG. 3 shows an EIS test using Example 2, Example 3, and Comparative Example 1 under 10,000 Hz to 0.1 Hz. The results of FIG. 3 show that Example 2 and Example 3 using a material with a high porosity and a high specific surface area as the negative electrode have a small resistance compared with Comparative Example 1, which also establishes the enhancement of the pseudo-capacitance effect.

FIG. 4 is a cyclic voltammetry test (CV graph) using Example 2, Example 3, and Comparative Example 1 under an electrochemical scan window of 0.6 volts (V) to 2.8 V. The results of FIG. 4 show that Example 2 and Example 3 using a material with a high porosity and a high specific surface area as the negative electrode have a larger capacitance area compared with Comparative Example 1, which indicates that a material with a high porosity and a high specific surface area as negative electrode may improve the pseudo-capacitance effect.

FIG. 5 shows a test of life and charge using Example 2 and Comparative Example 1 under a current of 300 mAh/g and a charging voltage and a discharging voltage of 5C. The results of FIG. 5 show that Example 2 using a material with a high porosity and a high specific surface area as the negative electrode improves its electric capacity and life by the pseudo-capacitance effect compared with Comparative Example 1.

FIG. 6 shows a test of life and charge using Example 1, Example 4, and Comparative Example 2 under a current of 300 mAh/g and a charging voltage and a discharging voltage of 5C. The results of FIG. 6 show that the life of Example 4 may be as high as 1,000 cycles under a high current and a large area, while Example 1 also has 200 cycles or more, while the use of Comparative Example 2 has only 100 cycles or less, which indicates that the energy storage devices (using a polymer film) of Example 1 and Example 4 have relatively good cyclic life performance.

Besides, FIG. 7 is an SEM photograph of Example 1, FIG. 8 is an SEM photograph of Example 4, and FIG. 9 is an SEM photograph of Comparative Example 2. The results of FIG. 7, FIG. 8, and FIG. 9 show that, when the separator is a polymer film (PES) (Example 1, FIG. 7), aluminum dendrites shown after the cell fails are relatively few and have a size within 20 µm to 30 µm; when the separator is a polymer film (PTFE) (with a low dielectric constant) (Example 4, FIG. 8), a few number of aluminum dendrites are formed; however, when the separator is made of glass fibers (Comparative Example 2, FIG. 9), after the cell fails, it can be seen in the disassembled cell that the separator is covered with aluminum dendrites that have a size greater than 200 µm, directly penetrating the separator and causing short circuits and failure of the cell.

In summary of the foregoing, in the disclosure, ions generated during reaction of the aluminum halide in the electrolyte produce a faradaic pseudo-capacitance reaction in the energy storage device made of an aluminum electrode, and the high-conductivity ionic liquid in the electrolyte cooperates with the faradaic pseudo-capacitance reaction to enhance the capacitance effect. As such, the energy storage device exhibits relatively good performance in terms of fast charging and discharging, electric capacity, and life.

## Claims

1. An energy storage device (100) made of an aluminum electrode, comprising:
a positive electrode (110);
a negative electrode (120), wherein the negative electrode (120) is the aluminum electrode;
a separator (130), disposed between the positive electrode (110) and the negative electrode (120); and
an electrolyte, disposed between the positive electrode (110) and the negative electrode (120) and partly located in the separator (130), wherein the electrolyte comprises an aluminum halide and an ionic liquid, the aluminum halide is configured to produce a faradaic pseudo-capacitance reaction in the energy storage device (100), and the ionic liquid is configured to cooperate with the faradaic pseudo-capacitance reaction in the energy storage device (100).

2. The energy storage device (100) according to claim 1, wherein the faradaic pseudo-capacitance reaction comprises a surface-type faradaic pseudo-capacitance reaction and an intercalation-type faradaic pseudo-capacitance reaction, the positive electrode (110) produces the surface-type faradaic pseudo-capacitance reaction and the intercalation-type faradaic pseudo-capacitance reaction, and the negative electrode (120) produces the surface-type faradaic pseudo-capacitance reaction.

3. The energy storage device (100) according to claim 1 or 2, wherein the positive electrode (110) is formed by coating a nickel foil (114) with an intercalation material (112).

4. The energy storage device (100) according to claim 3, wherein the intercalation material (112) comprises natural graphite, artificial graphite, a carbon nanotube, graphene, or a transition metal oxide.

5. The energy storage device (100) according to claim 3, wherein the intercalation material (112) has at least a first-sized particle and a second-sized particle, and the first-sized particle is different from the second-sized particle.

6. The energy storage device (100) according to any one of claims 1 to 5, wherein the negative electrode (120) comprises a high specific surface area material (122).

7. The energy storage device (100) according to claim 6, wherein the high specific surface area material (122) comprises foamed-metal, expanded mesh metal, or activated carbon.

8. The energy storage device (100) according to any one of claims 1 to 7, wherein a molar ratio of the aluminum halide to the ionic liquid is greater than at least 1.5.

9. The energy storage device (100) according to any one of claims 1 to 8, wherein a moisture content of the electrolyte is less than at least 1,000 ppm.

10. The energy storage device (100) according to any one of claims 1 to 9, wherein the separator (130) comprises a polymer film.
